# EUROPEAN PATENT SPECIFICATION

(11) **EP 3 247 894 B1**
(45) Date of publication and mention of the grant of the patent: **18.12.2019**
(21) Application number: 15837097.3
(22) Date of filing: 28.12.2015
(51) Int. Cl.: B01D 46/10, F02M 35/024

(54) **FILTERING CARTRIDGE, PARTICULARLY FOR IC ENGINES, AND FILTERING DEVICE COMPRISING SAID FILTERING CARTRIDGE**
FILTERPATRONE, INSBESONDERE FÜR VERBRENNUNGSMOTOREN, UND FILTERVORRICHTUNG MIT BESAGTER FILTERPATRONE
CARTOUCHE DE FILTRATION, EN PARTICULIER POUR MOTEURS À COMBUSTION INTERNE, ET DISPOSITIF DE FILTRATION COMPRENANT LADITE CARTOUCHE DE FILTRATION

(30) Priority: 19.01.2015 IT TO20150042
(43) Date of publication of application: 29.11.2017
(73) Proprietor: Officine Metallurgiche G. Cornaglia S.p.A., 10092 Beinasco (TO) (IT)
(72) Inventor: CORNAGLIA, Pier Mario, 10024 Moncalieri (TO) (IT); CORNAGLIA, Umberto, 10027 Moncalieri (TO) (IT)
(74) Representative: Robba, Pierpaolo
(86) International application number: PCT/IB2015/060003
(87) International publication number: WO 2016/116793

(56) References cited:
- WO-A1-2009/150165
- WO-A1-2012/055102
- WO-A1-2013/128417
- WO-A1-2014/092718
- WO-A1-2015/092681
- WO-A2-2010/092003
- DE-A1- 3 429 633
- DE-A1- 19 619 770
- DE-U1-202005 009 468
- GB-A- 2 299 034

## Description

### Technical Field

The present invention relates to a filtering cartridge, which can be used particularly in an IC engine for filtering the suction air of the engine.

The present invention further relates to a filtering device comprising such a filtering cartridge.

### Prior Art

As is known, IC engines require a filtering device for purifying the air sucked from the outside and intended for the combustion chambers.

In several cases, the air filter consists of a filtering cartridge received within a tight housing provided with an air inlet port and an air outlet port and with a cartridge receptacle arranged between said inlet port and said outlet port.

The filtering cartridge is made of a material capable of retaining the impurities contained in the air sucked from the outside and must have an exchange surface sufficient to obtain an efficient purification of the air. To this aim, said filtering cartridge is usually in the form of a sheet of filtering material, in particular paper, pleated in an accordion-like manner along a pleating direction in order to increase the surface for exchange with the air flow passing through the cartridge. Thus, the filtering cartridge has a pair of opposite pleated faces delimited by a pair of sides substantially parallel to the pleating direction and by a pair of sides substantially perpendicular to said direction.

The casing of the filtering device accommodating the filtering cartridge must be shaped so as to meet two different requirements: on one hand, said casing must define at its inside a path providing passage of the air through the cartridge, which in turn must be sized so as to meet the requirements of the engine to which the filtering device is associated; on the other hand, said casing must fit the configuration of the engine as well as of the other organs associated thereto and obviously also the space available in the engine compartment.

In the case of IC engines intended for the automotive field, in which trying to attain a reduction of the space requirements - simultaneously with an increase in performance and reliability - is one of the designing guidelines, the latter requirement is particularly felt.

The filtering cartridge is provided with a peripheral gasket adapted to ensure tightness between the filtering cartridge and the casing of the filtering device.

According to prior art, said peripheral gasket is made by casting and subsequent polymerization molding of a synthetic plastic resin, for example a polyurethane resin, possibly a foamed polyurethane resin. Said peripheral gasket usually extends over one of the pleated faces of the filtering cartridge and in parallel thereto.

Filtering cartridges known in the art are disclosed for instance in WO 2010/092003, WO 2009/150165 and WO 2013/128417. WO 2012/055102 discloses a filter cartridge with a gasket laying on a plane inclined with respect to the plane of the outlet and inlet face.

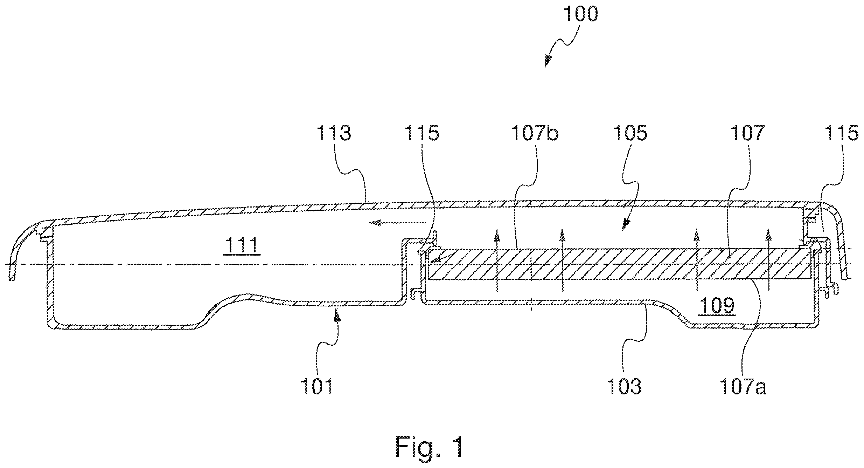

As can be seen also in Fig. 1, which schematically shows a filtering device of known type, according to prior art the casing 101 of the filtering device 100 comprises essentially a cup-like body 103 in which a housing 105 for the filtering cartridge 107 is provided arranged between an inlet duct 109 for dirty air and a duct 111 for clean air; a cover 113 hermetically closes the cup-like body 103 and defines, together therewith, the casing 101.

In order to reduce space requirements and increase filtering efficiency, the extension of the filtering cartridge 107 in the vertical direction is smaller than the thickness of the housing 105 and the cartridge is arranged in a middle position in said housing 105; consequently, the duct 109 for dirty air extends over a face (the lower face 107a in Figure 1) of said cartridge 107 and the duct 111 for clean air extends over a face (the upper face 107b in Figure 1) of said cartridge 107. By virtue of this arrangement, the air passing through the filtering cartridge 107 encounters a large filtering surface, with remarkable advantages for the overall filtering capacity, while maintaining an extremely compact structure of the filtering device 100.

The filtering cartridge 107 is provided with a peripheral gasket 115 arranged over one of the pleated faces - the upper face 107b of the filtering cartridge 107 - and in parallel thereto.

As can be well seen in Fig.1, the efficiency of a filtering device 100 of known type is negatively affected by the reduced contact surface between the peripheral gasket 115 and the cover 113 of the casing 101, corresponding to only 30% of the overall surface of said peripheral gasket. An object of the present invention is therefore to provide a filtering cartridge and a corresponding filtering device in which tightness efficiency is improved.

Another object of the present invention is to maintain the size of the filtering device as small as possible, while maintaining high performances in terms of air filtration.

A further object of the invention is to provide a filtering cartridge and a corresponding filtering device that can be manufactured in an easy and cost-effective manner and are therefore suitable for being industrially manufactured on a large scale.

These and other objects are achieved with the filtering cartridge and the filtering device according to the invention, as defined in the appended claims.

### Summary of the Invention

According to the invention, the filtering cartridge comprises a sheet of filtering material pleated in an accordion-like manner along a pleating direction so as to define a pair of opposite pleated faces, namely a first pleated inlet face for the air to be filtered and a second pleated outlet face for the filtered air, and a peripheral sealing gasket which extends along the perimeter of said filtering cartridge and in cross-section is substantially flat on the side facing the outlet pleated face for the filtered air and has a convex profile towards the inlet pleated face for the air to be filtered.

Accordingly, the filtering device according to the invention comprises the filtering cartridge described above and a casing accommodating said filtering cartridge, wherein said casing consists of a cup-like body and a corresponding cover and wherein in said cup-like body, at the housing for the filtering cartridge, there is provided a seat for the peripheral gasket of said filtering cartridge, said gasket having a concave profile in cross-section.

Owing to this measure, the contact surface between the peripheral gasket of the filtering cartridge and the casing of the filtering device can be remarkably increased, up to 90% of the overall surface of said peripheral gasket.

According to the invention, in order to maintain the filtering device thin and compact, and therefore suitable for being accommodated also in engine compartments of small-size vehicles, the peripheral gasket is not arranged parallel to the pleated faces of the filtering cartridge, but inclined relative thereto.

In particular, along the sides perpendicular to the pleating direction the peripheral gasket extends in parallel to the pleated faces of the filtering cartridge, whereas along the sides parallel to the pleating direction said peripheral gasket is inclined at an angle other than zero with respect to the pleated faces of the filtering cartridge.

For this purpose, along the sides parallel to the pleating direction there is provided a pair of flat lateral walls to which the peripheral gasket is attached.

According to the invention, in order to ensure a reliable connection between said gasket and the filtering cartridge, a plurality of through-holes is provided in said lateral walls along the path of the peripheral gasket: by virtue of these through-holes, during the step of casting the material of the gasket in its molten state, said material can penetrate through said flat walls up to the pleats of the filtering material and adhere there.

### Brief Description of the Drawings

Additional features and advantages of the invention will be more apparent from the following description of a preferred embodiment of the invention, given by way of non-limiting example, with reference to the annexed drawings, in which:
- Figure 1 is a cross-sectional schematic view of a filtering device of known type;
- Figure 2 is a bottom perspective view of a filtering cartridge according to the invention;
- Figure 3 is a bottom view of the filtering cartridge of Figure 2;
- Figure 4 is a cross-sectional view taken along the line A-A of the filtering cartridge of Figure 3;
- Figure 5 is a cross-sectional view taken along the line B-B of the filtering cartridge of Figure 3;
- Figure 6 is a side view of the filtering cartridge of Figure 2, shown without peripheral gasket;
- Figure 7 is a perspective view of a filtering cartridge according to an embodiment variant of the invention;
- Figure 8 is a cross-sectional schematic view of a filtering device according to the invention;
- Figure 9 is an enlarged view of the detail IX of Figure 8.

### Description of a Preferred Embodiment

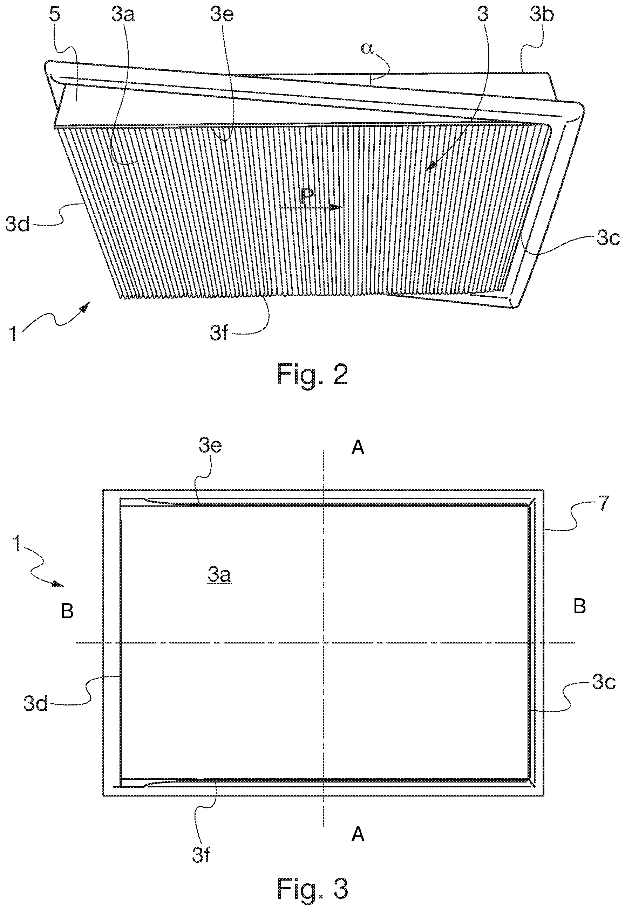

Referring at first to Figs. 2 and 3, the present invention relates to a filtering cartridge 1, in particular intended for filtering suction air in IC engines, for instance in the automotive field.

The filtering cartridge 1 comprises a sheet of filtering material 3 - for example paper - pleated in an accordion-like manner in a pleating direction P so as to form a plurality of pleats oriented in an orthogonal direction relative to said pleating direction P.

As a result, the filtering cartridge 1 has a substantially parallelepiped shape comprising two opposite pleated faces 3a,3b, namely a first air inlet face 3a (intended, in use, to face the inlet port of the filtering device) and a second air outlet face 3b (intended, in use, to face the outlet port of the filtering device).

The pleated faces 3a,3b are delimited by a pair of sides 3c,3d perpendicular to the pleating direction P - and therefore parallel to the orientation of the pleats of the sheet 3 - and by a second pair of sides 3e,3f parallel to the pleating direction P - and therefore perpendicular to the orientation of the pleats of the sheet 3.

Along the sides 3e,3f of said second pair of sides there are applied flat lateral walls 5, for instance made of paper, cardboard or plastics, and applied for instance by means of gluing or similar techniques.

The filtering cartridge 1 further comprises a peripheral gasket 7 arranged along the sides 3c-3f of the cartridge itself and projecting from the perimeter of said cartridge.

Said peripheral gasket 7 is made for instance of polyurethane resin, preferably foamed, and it is applied to the filtering cartridge 1 by casting and subsequent polymerization molding.

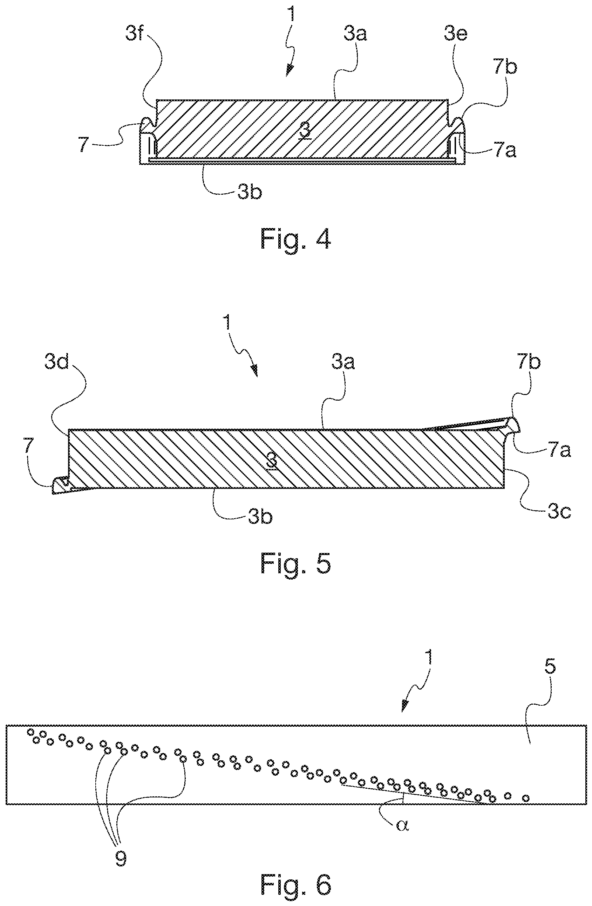

According to the invention, as is better visible in Figures 4 e 5, the peripheral gasket 7 in cross-section has a substantially flat face 7a in the direction towards the second air outlet face 3b of the filtering cartridge 1 and a convex profile 7b in the direction towards the firs air inlet face 3a of said filtering cartridge 1.

According to a particularly preferred embodiment of the invention, said convex profile 7b is a continuous curvilinear, preferably semielliptical, profile.

This configuration is contrary to what is usually provided by prior art, according to which peripheral gaskets have a convex profile in the direction towards the air outlet face of the filtering cartridge (see Figure 1).

By virtue of this arrangement, the peripheral gasket 7 of the filtering cartridge 1 according to the invention is suitable for optimizing tightness between the filtering cartridge and the casing of the corresponding filtering device, as will be described more in detail below.

According to the invention, the peripheral gasket 7 is not arranged parallel to the pleated faces 3a,3b of the filtering cartridge 1: along the first sides 3c,3d perpendicular to the pleating direction P, the peripheral gasket 7 extends in parallel to said pleated faces 3a,3b of said cartridge; along the second sides 3e,3f parallel to the pleating direction P, instead, said peripheral gasket 7 is inclined with respect to said pleated faces 3a,3b of said cartridge at an angle α other than zero, preferably comprised between 1° and 20°, more preferably comprised between 5° and 10°, and even more preferably equal to approximately 8°.

The inclined arrangement of the peripheral gasket 7, together with its conformation, allows to achieve the objects of the invention, providing a filtering cartridge in which tightness with respect to the housing of the filtering device is optimized and also the space requirements are optimized.

As is well visible in Figure 2, along the second sides 3e,3f parallel to the pleating direction P, the peripheral gasket 7 is applied to the lateral walls 5, which form a continuous flat surface for said gasket.

However, the material of the lateral walls 5 - such as paper, cardboard or plastics - may not guarantee a stable and reliable connection between the peripheral gasket 7 and the filtering cartridge 1.

In order to prevent such a risk, as is visible in Figure 6, each of the lateral walls 5 comprises a plurality of through-holes 9, arranged at the position of the gasket 7.

Said through-holes can be arranged along the trajectory of said gasket, i.e. substantially arranged along a straight line inclined at an angle α relative to the pleated faces 3a,3b of the cartridge 1. Alternatively, they can be arranged in a region located around said straight line, for example they can be aligned in multiple rows substantially parallel to said straight line, or offset on both sides of said straight line.

As the gasket 7, in a manner known per se, is made by casting of a resin in the molten state and subsequent polymerization molding, by virtue of the presence of the through-holes 9 during the step of casting the resin in the molten state can penetrate through the lateral sides 5 until it reaches the filtering material of the sheet 3 and adhere thereon.

This will ensure a stable and firm connection between the gasket 7 and the filtering cartridge 1 even in the presence of vibrations and other stresses that may arise in use.

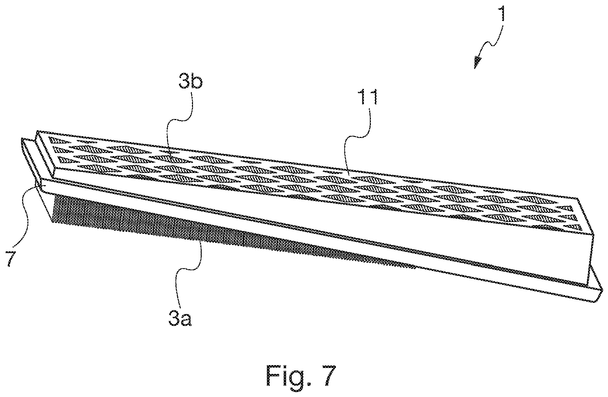

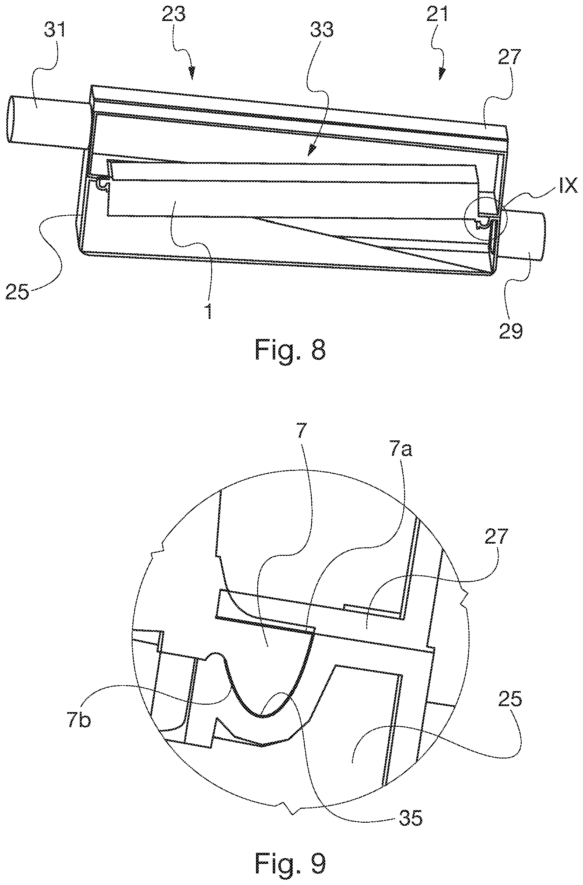

In an embodiment variant, the filtering cartridge 1 may comprise a reinforcing element intended for enhancing its mechanical strength and made for instance as a metal grid 11, as shown in the example of Figure 7. Said reinforcing element preferably extends on the air outlet face 3b of the filtering cartridge 1 and along the sides 3c-3f of said cartridge, between said air outlet face 3b and the peripheral gasket 7 (see Figure 7). Figures 8 and 9 schematically show a filtering device 21 according to the invention, comprising a filtering cartridge 1 as described above.

Said filtering device comprises a casing 23 defined by a cup-like body 25 and a corresponding cover 27 fitted thereon. In the casing 23 there are defined an inlet port 29 for the air to be filtered, an outlet port 31 for the filtered air and a housing 33 intended for the filtering cartridge and provided between said inlet port and said outlet port, the filtering cartridge 1 being arranged in said housing 33 so that the first pleated face 3a of said cartridge is oriented towards said inlet port 29 and the second pleated face 3b is oriented towards said outlet port 31 and so that the peripheral gasket 7 of said cartridge is situated between said cup-like body 25 and said cover 27, so as to provide tightness of the casing 23 of the filtering device.

According to the invention, within the body 25 of the casing 23, at the housing 33 for the filtering cartridge there is provided a seat 35 for the peripheral gasket 7 of the filtering cartridge 1, said seat 35 having a profile which is concave in cross-section and complementary to the convex profile 7b of said peripheral gasket 7.

In particular, in the particularly preferred embodiment illustrated in Figures 8 and 9, said seat 35 has a continuous curvilinear profile, in particular substantially semielliptical, complementary to said convex profile 7b of said peripheral gasket 7.

In addition, the cover 27 of the casing 23, at the housing 33 for the filtering cartridge, has a flat profile, complementary to the flat surface 7a of the peripheral gasket 7.

As is well visible in Figure 9, the particular conformation of the peripheral gasket 7, together with the provision - within the body 25 of the casing 23 of the filtering device 21 - of a seat with a concave profile allows to establish an extremely large contact between the surface of said gasket and the surface of said casing, which contact may be up to 90% of the total surface of said peripheral gasket 7.

It is clear that such a large surface contact between the gasket 7 of the filtering cartridge 1 and the casing 23 allows to optimize tightness efficiency between said filtering cartridge and said casing and, consequently, to increase filtering efficiency, while maintaining limited space requirements.

Furthermore, it will be evident to the person skilled in the art that the configuration of the filtering cartridge and of the corresponding filtering device according to the invention allows to make mounting of the filtering device quicker and easier: the filtering cartridge 1 can be inserted into the body 25 of the casing 23 and the peripheral gasket 7 can be fitted and pushed into the seat 35; in this way the cartridge will already be properly arranged and aligned inside the housing 23 and it will be possible to easily and quickly put the cover 27 thereon for tightly closing said housing.

While the invention has been described with reference to a currently preferred particular embodiment, it is obvious that several variants and modifications that will be apparent to the person skilled in the art fall within the scope of the invention as defined in the appended claims.

## Claims

1. Filtering cartridge (1), particularly intended for filtering suction air in IC engines, of the kind comprising a sheet of filtering material (3) pleated in an accordion-like manner in a pleating direction (P) so as to have a substantially parallelepiped shape comprising two opposite pleated faces (3a,3b), namely a first inlet face (3a) for the air to be filtered and a second outlet face (3b) for the filtered air, said pleated faces (3a,3b) being delimited by a first pair of sides (3c,3d) substantially perpendicular to said pleating direction (P) and by a second pair of sides (3e,3f) substantially parallel to said pleating direction, wherein said filtering cartridge (1) further comprises a peripheral gasket (7) arranged along said first and second pairs of sides (3c-3f) and projecting therefrom, wherein along the sides of said first pair of sides (3c,3d) said peripheral gasket (7) extends in parallel to said pleated faces (3a,3b) of said cartridge and along the sides of said second pair of sides (3e,3f) said peripheral gasket (7) is inclined with respect to said pleated faces (3a,3b) of said cartridge at an angle (α) other than zero, wherein along the sides of said second pair of sides (3e,3f) there are applied corresponding flat lateral walls (5), wherein said peripheral gasket (7) in cross-section has a substantially flat face (7a) in the direction towards said second pleated outlet face (3b) and a convex profile (7b) in the direction towards said first pleated inlet face (3a), **characterized in that** a plurality of through-holes is provided in said flat lateral walls along the path of the peripheral gasket and **in that** the material of the gasket penetrates through said through holes of said flat lateral walls up to the pleats of the filtering material and adhere there, in order to ensure a reliable connection between said gasket and the filtering cartridge.

2. Filtering cartridge (1) according to claim 1, wherein said convex profile (7b) is a continuous curvilinear profile.

3. Filtering cartridge (1) according to claim 2, wherein said convex profile (7b) is semielliptical.

4. Filtering cartridge (1) according to any of the preceding claims, wherein said angle (α) is comprised between 1° and 20°, preferably comprised between 5° and 10°, and more preferably equal to approximately 8°.

5. Filtering cartridge (1) according to any of the preceding claims, wherein said through-holes (9) are arranged along a straight line inclined at said angle (α) with respect to said pleated faces (3a,3b) of said cartridge or in a region located around said straight line.

6. Filtering cartridge (1) according to any of the preceding claims, wherein said cartridge comprises a reinforcing element, made for instance as a metal grid (11), extending on said second pleated outlet face (3b) of said cartridge and along the sides (3c-3f) of said cartridge, between said second pleated outlet face (3b) and said peripheral gasket (7).

7. Filtering cartridge (1) according to any of the preceding claims, wherein said peripheral gasket (7) is made of polyurethane resin, preferably foamed.

8. Filtering device (21), particularly intended for filtering suction air in IC engines, of the kind comprising a casing (23) defined by a body (25) and by a cover (27) cooperating therewith, wherein in said casing there are defined an inlet port (29) for the air to be filtered, an outlet port (31) for the filtered air and a housing (33) for a filtering cartridge arranged between said inlet port and said outlet port, **characterized in that** said filtering device comprises a filtering cartridge (1) according to any of the claims 1 to 7, said filtering cartridge (1) being arranged in said housing (33) so that said first pleated face (3a) of said cartridge is oriented towards said inlet port (29) and said second pleated face (3b) of said cartridge is oriented towards said outlet port (31) and so that said peripheral gasket (7) is situated between said body (25) and said cover (27) **and in that** said body (25), at said housing (33), has a seat (35) for said peripheral gasket, said seat having in cross-section a concave profile complementary to said convex profile (7b) of said peripheral gasket (7).

## Patentansprüche

1. Filterpatrone (1), insbesondere vorgesehen zum Filtern von Ansaugluft in Verbrennungsmotoren, einer Art, die ein Blatt eines Filtermaterials (3) aufweist, das akkordeonartig in einer Faltrichtung (P) gefaltet ist, sodass es im Wesentlichen eine Parallelepiped-Form hat, die zwei gegenüberliegende gefaltete Seite (3a, 3b) aufweist, nämlich eine erste Einlassseite (3a) für die zu filternde Luft und eine zweite Auslassseite (3b) für die gefilterte Luft, wobei die gefalteten Seiten (3a, 3b) von einem ersten Seitenpaar (3c, 3d), das im Wesentlichen senkrecht zu der Faltrichtung (P) ist, und von einem zweiten Seitenpaar (3e, 3f), das im Wesentlichen parallel zu der Faltrichtung ist, begrenzt sind, wobei die Filterpatrone (1) zudem eine umlaufende Dichtung (7) aufweist, die entlang der ersten und zweiten Seitenpaare (3c-3f) angeordnet ist und von dort vorsteht, wobei sich die umlaufende Dichtung (7) entlang der Seiten des ersten Seitenpaars (3c, 3d) parallel zu den gefalteten Seiten (3a, 3b) der Patrone begrenzt sind und die umlaufende Dichtung (7) entlang der Seiten des zweiten Seitenpaars (3e, 3f) in Bezug auf die gefalteten Seiten (3a, 3b) der Patrone in einem von Null verschiedenen Winkel α geneigt ist, wobei entlang der Seiten des zweiten Seitenpaars (3e, 3f) entsprechende flache seitliche Wände (5) angebracht sind, wobei die umlaufende Dichtung (7) im Querschnitt eine im Wesentlichen flachen Seite (7a) in der Richtung hin zu der zweiten gefalteten Auslassseite (3b) und in der Richtung hin zu der ersten gefalteten Einlassseite (3a) ein konvexes Profil (7b) aufweist, **dadurch gekennzeichnet, dass** in den flachen seitlichen Wänden mehrere Durchgangslöcher entlang des Wegs der umlaufenden Dichtung angeordnet sind und, dass das Material der Dichtung durch die Durchgangslöcher der flachen seitlichen Wände bis zu den Falten des Filtermaterials durchdringt und dort haftet, um eine zuverlässige Verbindung zwischen der Dichtung und der Filterpatrone zu bewirken.

2. Filterpatrone (1) nach Anspruch 1, wobei das konvexe Profil (7b) ein kontinuierliches kurvenförmiges Profil ist.

3. Filterpatrone (1) nach Anspruch 2, wobei das konvexe Profil (7b) halbelliptisch ist.

4. Filterpatrone (1) nach einem der vorstehenden Ansprüche, wobei der Winkel (α) zwischen 1° und 20° beträgt, vorzugsweise zwischen 5° und 10° beträgt und besonderes bevorzugt etwa 8° beträgt.

5. Filterpatrone (1) nach einem der vorstehenden Ansprüche, wobei die durchgehenden Löcher (9) entlang einer geraden Linie, die um den Winkel (α) in Bezug auf die gefalteten Seiten (3a, 3b) der Patrone geneigt ist, oder in einem Bereich um die gerade Linie herum angeordnet sind.

6. Filterpatrone (1) nach einem der vorstehenden Ansprüche, wobei die Patrone ein Verstärkungselement aufweist, das beispielsweise als ein Metallgitter (11) ausgebildet ist, das sich auf der zweiten gefalteten Auslassseite (3b) der Patrone entlang der Seiten (3c-3f) der Patrone zwischen der zweiten gefalteten Auslassseite (3b) und der umlaufenden Dichtung (7) erstreckt.

7. Filterpatrone (1) nach einem der vorstehenden Ansprüche, wobei die umlaufende Dichtung (7) aus einem Polyurethanharz ist, vorzugsweise geschäumt.

8. Filtervorrichtung (21) insbesondere zum Filtern von Ansaugluft in Verbrennungsmotoren, eine Art, die ein Gehäuse (23) aufweist, das durch ein Körper (25) und einem damit zusammenwirkenden Deckel (27) definiert ist, wobei in dem Gehäuse eine Einlassöffnung (29) für zu filternde Luft, eine Auslassöffnung (31) für gefilterte Luft und ein Gehäuse (33) für eine Filterkartusche ausgebildet ist, die zwischen der Einlassöffnung und der Auslassöffnung angeordnet ist, **dadurch gekennzeichnet, dass** die Filtervorrichtung eine Filterpatrone (1) nach einem der Ansprüche 1 bis 7 aufweist, wobei die Filterpatrone (1) in dem Gehäuse (33) so angeordnet ist, dass die erste gefaltete Seite (3a) der Patrone zu der Einlassöffnung (29) hin und die zweite gefaltete Seite (3b) der Patrone zu der Auslassöffnung (31) hin orientiert ist und dass die umlaufende Dichtung (7) zwischen dem Körper (25) und dem Deckel (27) angeordnet ist und dass der Körper (25) an dem Gehäuse (33) ein Sitz (35) für die umlaufende Dichtung hat, wobei der Sitz im Querschnitt ein konkaves Profil hat, das dem konvexen Profil der umlaufenden Dichtung (7) entspricht.

## Revendications

1. Cartouche filtrante (1), destinée notamment à filtrer de l'air d'aspiration dans des moteurs à combustion interne, de la sorte comprenant une feuille de matière filtrante (3) plissée en accordéon dans une direction de plissage (P) de façon à avoir une forme sensiblement parallélépipédique comprenant deux faces plissées opposées (3a, 3b), à savoir une première face d'entrée (3a) pour l'air à filtrer et une seconde face de sortie (3b) pour l'air filtré, les faces plissées (3a, 3b) étant délimitées par une première paire de côtés (3c, 3d) sensiblement perpendiculaires à ladite direction de plissage (P) et par une seconde paire de côtés (3e, 3f) sensiblement parallèles à ladite direction de plissage, dans laquelle la cartouche filtrante (1) comprend en outre un joint périphérique (7) agencé le long desdites première et seconde paires de côtés (3c à 3f) et dépassant de ceux-ci, dans laquelle le long des côtés de ladite première paire de côtés (3c, 3d) ledit joint périphérique (7) s'étend en parallèle auxdites faces plissées (3a, 3b) de ladite cartouche et le long des côtés de ladite seconde paire de côtés (3e, 3f) ledit joint périphérique (7) est incliné par rapport auxdites faces plissées (3a, 3b) de ladite cartouche à un angle (α) autre que zéro, dans laquelle le long des côtés de ladite seconde paire de côtés (3e, 3f) sont appliquées des parois latérales plates (5) correspondantes, dans laquelle ledit joint périphérique (7) en section transversale a une face sensiblement plate (7a) dans la direction vers ladite seconde face de sortie plissée (3b) et un profil convexe (7b) dans la direction vers ladite première face d'entrée plissée (3a), **caractérisée en ce qu'**une pluralité de trous traversants sont prévus dans lesdites parois latérales plates le long du trajet du joint périphérique et **en ce que** la matière du joint pénètre à travers lesdits trous traversants desdites parois latérales plates jusqu'aux plis de la matière filtrante et y adhère, afin de garantir un raccordement fiable entre ledit joint et la cartouche filtrante.

2. Cartouche filtrante (1) selon la revendication 1, dans laquelle ledit profil convexe (7b) est un profil curviligne continu.

3. Cartouche filtrante (1) selon la revendication 2, dans laquelle ledit profil convexe (7b) est semi-elliptique.

4. Cartouche filtrante (1) selon l'une quelconque des revendications précédentes, dans laquelle ledit angle (α) est compris entre 1° et 20°, de préférence compris entre 5° et 10°, et de manière davantage préférée égal à approximativement 8°.

5. Cartouche filtrante (1) selon l'une quelconque des revendications précédentes, dans laquelle lesdits trous traversants (9) sont agencés le long d'une ligne droite inclinée audit angle (α) par rapport auxdites faces plissées (3a, 3b) de ladite cartouche ou dans une région située autour de ladite ligne droite.

6. Cartouche filtrante (1) selon l'une quelconque des revendications précédentes, dans laquelle ladite cartouche comprend un élément de renforcement, réalisé par exemple sous forme de grille en métal (11), s'étendant sur ladite seconde face de sortie plissée (3b) de ladite cartouche et le long des côtés (3c à 3f) de ladite cartouche, entre ladite seconde face de sortie plissée (3b) et ledit joint périphérique (7).

7. Cartouche filtrante (1) selon l'une quelconque des revendications précédentes, dans laquelle ledit joint périphérique (7) est réalisé en résine polyuréthane, de préférence expansée.

8. Dispositif filtrant (21), destiné notamment à filtrer de l'air d'aspiration dans des moteurs à combustion interne, de la sorte comprenant un boîtier (23) défini par un corps (25) et par un couvercle (27) coopérant avec celui-ci, dans lequel dans ledit boîtier sont définis un orifice d'entrée (29) pour l'air à filtrer, un orifice de sortie (31) pour l'air filtré et un logement (33) pour une cartouche filtrante agencé entre ledit orifice d'entrée et ledit orifice de sortie, **caractérisé en ce que** ledit dispositif filtrant comprend une cartouche filtrante selon l'une quelconque des revendications 1 à 7,
ladite cartouche filtrante (1) étant agencée dans ledit logement (33) de sorte que ladite première face plissée (3a) de ladite cartouche est orientée vers ledit orifice d'entrée (29) et ladite seconde face plissée (3b) de ladite cartouche est orientée vers ledit orifice de sortie (31) et de sorte que ledit joint périphérique (7) est situé entre ledit corps (25) et ledit couvercle (27) et **en ce que** ledit corps (25), au niveau dudit logement (33), comporte un siège (35) pour ledit joint périphérique, ledit siège ayant en section transversale un profil concave complémentaire dudit profil convexe (7b) du joint périphérique (7).
